# EUROPÄISCHE PATENTANMELDUNG

(11) **EP 0 981 129 A2**
(43) Veröffentlichungstag der Anmeldung: **23.02.2000**
(21) Anmeldenummer: 99202592.4
(22) Anmeldetag: 09.08.1999
(51) Int. Cl.: G10L 15/26

(54) **Verfahren und Anordnung zum Durchführen einer Datenbankabfrage**

(30) Priorität: 17.08.1998 DE 19837102
(71) Anmelder: Philips Corporate Intellectual Property GmbH, 52064 Aachen (DE); Koninklijke Philips Electronics N.V., 5621 BA Eindhoven (NL)
(72) Erfinder: Rüber, Bernhard, 22335 Hamburg (DE); Kellner, Andreas, 22335 Hamburg (DE); Seide, Frank, 22335 Hamburg (DE)
(74) Vertreter: Gössmann, Klemens

(57) **Zusammenfassung**

Bei einer in natürlicher Sprache gesprochenen Datenbankanfrage ist normalerweise ein Dialog mit dem Datenbanksystem erforderlich, in dem der Benutzer durch das System wiederholt zur Abgabe von weiteren Angaben aufgefordert wird. Aus jeder vom Benutzer abgegebenen Sprachäußerung werden mehrere Sätze von Angaben abgeleitet. Die darin enthaltenen Angaben werden mit früher ermittelten, gespeicherten Angaben auf Konsistenz geprüft und konsistente neue Angaben gespeichert bzw. gespeicherte Angaben korrigiert oder verifiziert. Außerdem werden die gespeicherten Angaben im wesentlichen bei jedem Dialogschritt verwendet, um daraus eine möglichst optimale Aufforderung des Systems an den Benutzer abzuleiten. Vorzugsweise werden die Angaben auch mit Wahrscheinlichkeitswerten bzw. Zuverlässigkeitswerten gespeichert, wobei die entsprechenden Werte neu abzuspeichernder Angaben aus der Zuverlässigkeit der Angaben der jeweiligen Sprachäußerung und der entsprechenden konsistenten gespeicherten Angaben gebildet werden.

## Beschreibung

Die Erfindung betrifft ein Verfahren zum Durchführen einer Datenbankanfrage mittels einer Datenverarbeitungsanordnung, wobei ein Benutzer die Anfrage in Form von mehreren Sprachäußerungen in natürlicher Sprache eingibt und nach jeder Sprachäußerung eine Sprachausgabe durch die Datenverarbeitungsanordnung erfolgt und jede Sprachäußerung in einer Erkennungsanordnung in wenigstens einen Satz von Angaben mit größter akustischer Wahrscheinlichkeit unter Berücksichtigung eines Sprachmodells umgesetzt wird, von denen die Angaben auf Konsistenz geprüft werden, und konsistente Angaben gespeichert werden, sowie eine dafür geeignete Anordnung.

Ein derartiges Verfahren und eine entsprechende Anordnung sind aus der DE 196 39 843.6 A1 (PHD 96-167) bekannt. Dabei werden jeweils die aus der Sprachäußerung abgeleiteten Angaben mit höchster Wahrscheinlichkeit, deren Konsistenz erfolgreich geprüft wurde, gespeichert. Diese Angaben werden für die Prüfung der aus der nächsten Sprachäußerung abgeleiteten Angaben auf Konsistenz und möglicherweise am Ende für die Datenbankanfrage verwendet. Der Benutzer wird durch eine Sprachausgabe des Systems so oft zu einer Abgabe einer Sprachäußerung veranlaßt, bis alle notwendigen Angaben für eine Datenbankanfrage gesammelt sind. Damit hängt jede Sprachausgabe des Systems in einer begrenzten Weise von der bzw. von den vorhergehenden Sprachäußerungen und den daraus abgeleiteten Angaben ab.

Bei diesem Verfahren ist es jedoch möglich, daß die richtige Angabe, die durch den Benutzer in der Sprachäußerung gemeint war, nicht mit der höchsten Wahrscheinlichkeit erkannt wird, sondern beispielsweise aufgrund einer schlechten Aussprache des Benutzers mit einer geringeren Wahrscheinlichkeit Da diese Angaben mit geringerer Wahrscheinlichkeit jedoch nicht weiterverfolgt werden, kann schließlich, wenn mit einer nicht richtigen Angabe, die mit höchster Wahrscheinlichkeit erkannt worden ist, der Dialog mit dem Benutzer weitergeführt und diese Angabe nicht korrigiert wird, die endgültige Datenbankanfrage von nicht zutreffenden Angaben abgeleitet werden.

Aus der WO 96/13030 ist ein Verfahren und eine Anordnung für eine Fernsprechauskunft bekannt, bei der aus jeder Sprachäußerung des Benutzers mehrere Angaben abgeleitet und gespeichert werden. Die Sprachausgaben des Systems an den Benutzer verlaufen jedoch nach einem festen Schema, und die bisher abgeleiteten Angaben werden dazu benutzt, die Menge der Daten aus der Datenbank mit denen die aus der folgenden Sprachäußerung abgeleiteten Angaben verglichen werden, zu reduzieren.

Aufgabe der Erfindung ist es, ein Verfahren der eingangs genannten Art anzugeben, mit dem in verschiedensten Anwendungen eine für den Benutzer möglichst angenehme und möglichst sichere Ermittlung aller für eine Datenbankanfrage erforderlichen Angaben möglich ist.

Diese Aufgabe wird erfindungsgemäß dadurch gelöst, daß nach jeder Sprachäußerung alle daraus abgeleiteten Sätze von Angaben mit allen gespeicherten Sätzen von Angaben auf Konsistenz geprüft werden und die erfolgreich auf Konsistenz geprüften abgeleiteten Angaben gespeichert werden und daß wenigstens eine Sprachausgabe aus gespeicherten Angaben abgeleitet wird.

Es werden also nicht nur alle Angaben, die konsistent und damit sinnvoll sind, gespeichert, sondern es werden diese Angaben sowie früher ermittelte Angaben auch vorzugsweise bei jedem Dialogschritt verwendet, um die nächste Sprachausgabe des Systems daraus zu erzeugen. Dadurch können dann beispielsweise nicht nur allgemeine Sprachausgaben gebildet werden, beispielsweise nach der Stadt und der Straße des gewünschten Teilnehmers bei einer Fernsprechauskunft oder nach Abfahrtsbahnhof, Zielbahnhof oder Zeit bei einer Fahrplanauskunft, sondern es können auch gezielte Fragen an den Benutzer gestellt werden, beispielsweise um bestimmte Angaben zu verifizieren, d.h. derartige Angaben vom Benutzer gegebenenfalls in abgewandelter Form wiederholen zu lassen.

Das Ableiten der einzelnen Angaben aus einer Sprachäußerung kann durch die Ermittlung aller Wörter mit genügender Einzelwahrscheinlichkeit im Sprachsignal oder auch aufeine Weise erfolgen, wie in der EP 702 353 A2 (PHD 94-120) angegeben ist. Dabei wird aus der Sprachäußerung ein Wortgraph abgeleitet, aus dessen Kanten nur die Angaben bzw. Informationen entnommen werden, die für die Datenbankanfrage relevant sind. Außerdem können allgemeine Sprachmodelle und auch anwendungsspezifische Regeln berücksichtigt werden. Beispielsweise sind die Angaben 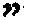 Nachmittags" und 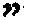 3 Uhr" mit der Angabe 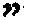 15 Uhr" gleichwertig.

Insbesondere bei dieser bekannten Weise der Ableitung von Angaben aus einer Sprachäußerung ergeben sich für dieselbe Kategorie von Angaben wie z.B. Namen, Zeitangaben usw. verschiedene Angaben, die jedoch aufgrund unterschiedlicher Ähnlichkeit mit der Sprachäußerung sowie aufgrund von weiteren Regeln wie Sprachmodellen unterschiedliche Wahrscheinlichkeiten haben. Eine Ausgestaltung der Erfindung ist daher dadurch gekennzeichnet, daß jede Angabe mit einer Wahrscheinlichkeit gespeichert wird, die aus der beim Erkennungsprozeß ermittelten zugeordneten Wahrscheinlichkeit dieser Angabe und der höchsten Wahrscheinlichkeit der gespeicherten Angabe, mit der Konsistenz erfolgreich geprüft wurde, abgeleitet wird. Wenn bei der Erkennung beispielsweise mehrere Namen mit unterschiedlicher Wahrscheinlichkeit abgeleitet werden und zumindest einige Namen bereits gespeichert waren, werden solche Namen mit kombinierter Wahrscheinlichkeit gespeichert, die sich aus der Wahrscheinlichkeit der aus der letzten Sprachäußerung ermittelten Angabe und der bereits vorher gespeicherten Angabe bestimmt.

Bei der Ableitung von Angaben aus einem Sprachsignal werden von der Erkennungsanordnung eine begrenzte Anzahl von Angaben abgegeben, beispielsweise eine vorbestimmte Anzahl oder Angaben mit einer Wahrscheinlichkeit über einer vorgegebenen Schwelle. Damit wird jedoch allgemein mit jedem Dialogschritt, d.h. mit jeder neuen Sprachäußerung die gesamte Menge aller Angaben jeweils vergrößert. Um diesen Effekt zu begrenzen, ist es nach einer weiteren Ausgestaltung der Erfindung zweckmäßig, daß nur solche Angaben gespeichert werden, deren Wahrscheinlichkeit einen Schwellwert überschreitet. Dies bezieht sich also auf die kombinierte Wahrscheinlichkeit aus der Wahrscheinlichkeit der Angabe selbst und der wahrscheinlichsten konsistenten gespeicherten Angabe.

Wenn aus einer Sprachäußerung mehrere Folgen von Angaben abgeleitet werden, können auch Zuverlässigkeitswerte für diese Angaben aus den einzelnen Wahrscheinlichkeiten der Sätze von Angaben, in denen diese Angabe enthalten ist, gebildet werden. In diesem Falle ist eine weitere Ausgestaltung der Erfindung zweckmäßig, daß nur solche Angaben gespeichert werden, deren Zuverlässigkeitswert einen Schwellwert überschreitet. Dadurch kann die Anzahl von Angaben, die bis zur endgültigen Bildung der Datenbankanfrage gespeichert und mitgeführt werden müssen, begrenzt werden.

Eine weitere Aufgabe der Erfindung ist es, eine Anordnung anzugeben, die eine für den Benutzer möglichst angenehme und sichere Bestimmung der Angaben für eine Datenbankanfrage ermöglicht. Diese Aufgabe wird durch die in dem weiteren unabhängigen Anspruch angegebenen Merkmale gelöst.

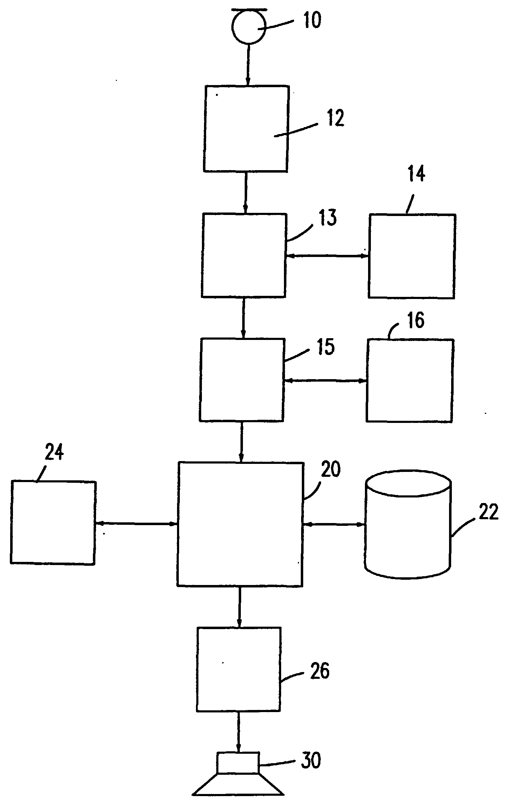

Ein Ausführungsbeispiel für eine derartige Anordnung ist in der Figur dargestellt. Darin ist ein Mikrofon 10 dargestellt, das eine Sprachäußerung eines Benutzers aufnimmt und einer Anordnung 12 zuführt, in der diese Sprachäußerung wiederholt abgetastet wird und die abgetasteten Sprachsignale in digitale Werte umgesetzt werden, aus denen das Sprachsignal kennzeichnende charakteristische Werte abgeleitet beispielsweise die Amplitude in verschiedenen Frequenzbändern. Diese charakteristischen Werte werden einer Anordnung 13 zugeführt, in der diese Werte mit Referenzwerten aus einem Speicher 14 verglichen und am den Vergleichswerten Worthypothesen abgeleitet werden.

Diese Anordnung 13 gibt die beendeten Worthypothesen als Wortgraph ab und führt sie einer weiteren Anordnung 15 zu, in der aus dem Wortgraph mit Hilfe von in einem Speicher 16 gespeicherten Regeln ein sogenannter Konzeptgraph erzeugt wird, wie in der bereits erwähnten EP 0 702 353 A2 (PHD 94-120) beschrieben ist. In dem Konzeptgraphen sind mehrere unterschiedliche Pfade vom Anfang bis zum Ende des Konzeptgraphen möglich, die unterschiedliche Bewertungswerte aufweisen. Diese Bewertungswerte werden aus den Bewertungswerten des Wortgraphen und den Regeln gebildet und stellen ein Maß für die akustische Wahrscheinlichkeit dar, daß die Folge von Konzepten in dem betreffenden Pfad durch den Konzeptgraphen, d.h. der entsprechende Satz von Angaben, der tatsächlich gesprochenen Sprachäußerung des Benutzers entspricht.

Diese Sätze von Angaben werden nun einer weiteren Anordnung 20 zugeführt, in der die Angaben auf Konsistenz geprüft werden. Dazu werden z.B. zunächst die Angaben untereinander auf Konsistenz, d.h. auf Widerspruchsfreiheit geprüft. Ferner werden die Angaben mit entsprechenden Angaben verglichen, die bei vorgehenden Schütten des Dialogs zwischen dem Benutzer und dem System ermittelt wurden und die in einem Speicher 24 zwischengespeichert sind. Schließlich werden die Angaben in den von der Anordnung 1 zugeführten Sätzen mit zumindest einigen Informationen der in einem Speicher 22 enthaltenen Datenbank verglichen. Dieser Speicher 22 ist üblicherweise als Plattenspeicher mit großer Speicherkapazität realisiert. Beispielsweise wird geprüft, ob bestimmte Angaben beispielsweise ein bestimmter Bahnhofsname bei einem Fahrplanauskunftssystem oder ein bestimmter Teilnehmername bei einem Telefonvermittlungssystem in der Datenbank im Speicher 22 tatsächlich enthalten ist.

Die Bewertungswerte entsprechend den Wahrscheinlichkeiten, die für die einzelnen Sätze von Angaben von der Anordnung 15 abgegeben werden, werden in der Anordnung 20 zu neuen Bewertungswerten für die erfolgreich auf Konsistenz geprüften Angaben verwendet, indem aus diesen Wahrscheinlichkeiten und den besten Wahrscheinlichkeiten der Angaben, mit denen Konsistenz festgestellt worden ist, eine neue Wahrscheinlichkeit bestimmt wird, die mit den Angaben im Speicher 24 abgespeichert wird. Vor dem Abspeichern wird die neue Wahrscheinlichkeit mit einem Schwellwert verglichen, der konstant sein kann oder im Verlauf des Dialogs angepaßt wird. Es ist auch möglich, aus den Wahrscheinlichkeiten aller Sätze von Angaben, die aus einer Sprachäußerung abgeleitet wurden, Zuverlässigkeitswerte zu bilden und die in entsprechender Weise mit einem Schwellwert zu vergleichen und zusammen mit den Angaben abzuspeichern. Die abgespeicherten Angaben mit den Wahrscheinlichkeitswerten bzw. Zuverlässigkeitswerten dienen bei der nächsten Sprachäußerung wieder für die Prüfung der daraus abgeleiteten Angaben.

Nach der Verarbeitung jeder Sprachäußerung wird in der Anordnung 20 geprüft, ob alle Angaben für eine vollständige Datenbankanfrage vorhanden sind. Wenn dies nicht der Fall ist, wird aus den im Speicher 24 gespeicherten Angaben und deren Wahrscheinlichkeiten in der Anordnung 20 eine Sprachausgabe gebildet, die über einen Verstärker 26 und einen Lautsprecher 30 eine akustische Aufforderung an den Benutzer richtet, eine Sprachäußerung mit bestimmten weiteren Angaben abzugeben. Dafür werden jeweils die Angaben mit höchster Wahrscheinlichkeit aus dem Speicher 24 verwendet. Wenn durch die folgende Sprachäußerung des Benutzen einzelne Angaben korrigiert, z.B. negiert wird bei der folgenden Verarbeitung dieser Sprachäußerung beispielsweise diese Angabe gelöscht und die Angabe derselben Kategorie, beispielsweise Namen, mit nächstgeringerer Wahrscheinlichkeit bzw. Zuverlässigkeit für den weiteren Verlauf des Dialogs zugrunde gelegt. Dieser Ablauf wird wiederholt, bis schließlich alle Angaben für eine vollständige Datenbankanfrage mit ausreichender Wahrscheinlichkeit bzw. Zuverlässigkeit vorliegen.

## Patentansprüche

1. Verfahren zum Durchführen einer Datenbankanfrage mittels einer Datenverarbeitungsanordnung,
wobei ein Benutzer die Anfrage in Form von mehreren Sprachäußerungen in natürlicher Sprache eingibt und nach jeder Sprachäußerung eine Sprachausgabe durch die Datenverarbeitungsanordnung erfolgt und jede Sprachäußerung in einer Erkennungsanordnung in wenigstens einen Satz von Angaben mit größter akustischer Wahrscheinlichkeit unter Berücksichtigung eines Sprachmodells umgesetzt wird, von denen die Angaben auf Konsistenz geprüft werden, und konsistente Angaben gespeichert werden,
dadurch gekennzeichnet,
daß nach jeder Sprachäußerung alle daraus abgeleiteten Sätze von Angaben mit allen gespeicherten Sätzen von Angaben auf Konsistenz geprüft werden und die erfolgreich auf Konsistenz geprüften abgeleiteten Angaben gespeichert werden und
daß wenigstens eine Sprachausgabe aus gespeicherten Angaben abgeleitet wird.

2. Verfahren nach Anspruch, wobei jeder Angabe von der Erkennungsanordnung eine Wahrscheinlichkeit zugeordnet ist,
dadurch gekennzeichnet,
daß jede Angabe mit einer Wahrscheinlichkeit gespeichert wird, die aus der zugeordneten Wahrscheinlichkeit dieser Angabe und der höchsten Wahrscheinlichkeit der gespeicherten Angab, mit der Konsistenz erfolgreich geprüft wurde, abgeleitet wird.

3. Verfahren nach Anspruch 2,
dadurch gekennzeichnet,
daß nur solche Angaben gespeichert werden, deren Wahrscheinlichkeit einen Schwellwert überschreitet.

4. Verfahren nach Anspruch 2, wobei eine Zuverlässigkeit für jede Angabe aus den Wahrscheinlichkeiten der Sätze von Angaben gebildet wird, in denen diese Angabe enthalten ist,
dadurch gekennzeichnet,
daß nur solche Angaben gespeichert werden, deren Zuverlässigkeit einen Schwellwert überschreitet.

5. Anordnung zum Durchführen von Datenbankanfragen eines Benutzers in Form von Sprachäußerungen in natürlicher Sprache, mit
einer Erkennungsanordnung, um aus jeder Sprachäußerung wenigstens einen Satz von Angaben mit größter akustischer Wahrscheinlichkeit unter Berücksichtigung eines Sprachmodells abzuleiten und abzugeben,
einer Steueranordnung, um jeden von der Erkennungsanordnung abgegebenen Satz von Angaben auf Konsistenz zu prüfen und um Sprachausgaben zu erzeugen,
dadurch gekennzeichnet,
daß die Erkennungsanordnung eingerichtet ist, aus jeder Sprachäußerung mehrere Sätze von Angaben mit abnehmender Wahrscheinlichkeit abzuleiten,
daß eine Speicheranordnung zur Speicherung mehrerer unterschiedlicher Sätze von Angaben vorgesehen ist,
daß die Steueranordnung eingerichtet ist, um
- jeden von einer Sprachäußerung abgeleiteten Satz von Angaben mit den entsprechenden Angaben aller gespeicherten Sätze von Angaben auf Konsistenz zu prüfen und
- Sätze von konsistenten Angaben in der Speicheranordnung zu speichern und
- wenigstens eine Sprachausgabe aus den gespeicherten Angaben zu erzeugen.
